# EUROPÄISCHE PATENTSCHRIFT

(11) **EP 0 842 078 B1**
(45) Veröffentlichungstag und Bekanntmachung des Hinweises auf die Patenterteilung: **24.11.1999**
(21) Anmeldenummer: 96928372.0
(22) Anmeldetag: 24.07.1996
(51) Int. Cl.: B60T 17/22, B60T 8/34

(54) **VERFAHREN ZUR ENTLÜFTUNG EINER SCHLUPFGEREGELTEN, HYDRAULISCHEN ZWEIKREISBREMSANLAGE FÜR KRAFTFAHRZEUGE UND VORRICHTUNG ZUR DURCHFÜHRUNG DIESES VERFAHRENS**
PROCESS FOR BLEEDING AN ANTI-SLIP, HYDRAULIC, TWIN-CIRCUIT BRAKING SYSTEM FOR MOTOR VEHICLES AND DEVICE FOR IMPLEMENTING IT
PROCEDE POUR LA PURGE D'UNE INSTALLATION DE FREINAGE HYDRAULIQUE ANTIPATINAGE A DOUBLE CIRCUIT POUR VEHICULES A MOTEUR ET DISPOSITIF POUR LA MISE EN OEUVRE DE CE PROCEDE

(30) Priorität: 05.08.1995 DE 19528859
(43) Veröffentlichungstag der Anmeldung: 20.05.1998
(73) Patentinhaber: Continental Teves AG & Co. oHG, 60488 Frankfurt (DE)
(72) Erfinder: BAECHLE, Martin, D-61479 Glashütten (DE); SCHIFFER, Hanns-Ulrich, D-65795 Hattersheim (DE); SCHMITT, Stefan, D-65343 Eltville (DE)
(86) Internationale Anmeldenummer: EP9603261
(87) Internationale Veröffentlichungsnummer: WO9706042

(56) Entgegenhaltungen:
- EP-A- 0 342 078
- DE-A- 3 806 840
- PATENT ABSTRACTS OF JAPAN vol. 16, no. 374 (M-1293), 11.August 1992 & JP,A,04 121264 (FUJI HEAVY IND.), 22.April 1992,
- PATENT ABSTRACTS OF JAPAN vol. 6, no. 113 (M-138), 24.Juni 1982 & JP,A,57 041248 (MIYATA JIDOKI HANBAI), 8.März 1982,
- PATENT ABSTRACTS OF JAPAN vol. 17, no. 240 (M-1490), 14.Mai 1993 & JP,A,04 365660 (TOYOTA MOTOR CORP.), 17.Dezember 1992,

## Beschreibung

Die Erfindung betrifft ein Verfahren zur Entlüftung einer schlupfgeregelten, hydraulischen Zweikreisbremsanlage für Kraftfahrzeuge nach dem Oberbegriff des Anspruchs 1, sowie eine Vorrichtung zur Durchführung des Verfahrens nach dem Oberbegriff des Anspruchs 7.

Schlupfgeregelte Kraftfahrzeugbremsanlagen weisen in der Regel eine umfangreiche Verbohrung für druckmittelführende Kanäle in einem Gehäuse auf, die das Befüllen und Entlüften erschweren. Häufig bedient man sich hierzu der Hochvakuumtechnik, insbesondere während der Kraftfahrzeugendmontage am Band. Es treten jedoch Fälle auf, die das Einsetzen der Hochvakuumtechnik unmöglich machen und die Bremsanlage mit konventionellem Spülverfahren befüllt und entlüftet werden muß. Der hierzu erforderliche Aufwand ist im Hinblick auf die einzelnen erforderlichen Arbeitsschritte erheblich, da sowohl Vorentlüftungs-, Hauptentlüftungs- und Nachentlüftungsphasen erforderlich sind, in denen das Bremspedal in der Summe mit ca. 200 Hüben betätigt werden muß.

Aus der DE 38 06 840 A1 ist eine Einrichtung zum Entfernen von Lufteinschlüssen aus dem Sekundärhydraulikkreis der Hydraulikeinheit eines Antiblockierregelsystems einer Kraftfahrzeugbremsanlage bekannt, bei der die zu entlüftenden Primärhydraulikkreise mittels Entlüftungseinrichtungen nur in der Druckabbaustellung der Magnetventile der Hydraulikeinheit mit den an einer Rückförderpumpe angeschlossenen Sekundärhydraulikkreisen strömungsverbunden sind. Daher wird eine Steuereinheit vorgeschlagen, durch die bei permanent gedrücktem Bremspedal des Bremsdruckgebers und permanent eingeschalteter Rückförderpumpe die jeweils zugehörigen Sekundärhydraulikkreise durch mehrmalige, gleich große Ansteuerschritte der Magnetventile nach einem vorgegebenen Ansteuerzyklus die Lufteinschlüsse aus den Sekundärhydraulikkreisen entfernt werden.

Die permanente Betätigung des Bremspedals verhindert jedoch das Nachsaugen von Bremsflüssigkeit aus dem Nachlaufbehälter des Bremsdruckgebers, sodaß das Entfernen von Lufteinschlüssen auf die Radbremsen der Sekundärkreise beschränkt ist.

Daher ist es die Aufgabe der Erfindung, mit einem einzigen Verfahren alle Radbremsen einer Schlupfgeregelten hydraulischen Zweikreisbremsanlagen für Kraftfahrzeuge zu entlüften und zu befüllen, das sich durch eine einfache, schnelle und automatisierungsgerechte Anwendung auszeichnet, wozu eine einzige Vorrichtung zur Durchführung des Entlüftungs- und Befüllungsverfahrens vorgestellt werden soll, die sowohl einen Einsatz innerhalb der Fahrzeugfertigung als auch im Werkstattbetrieb erlaubt.

Diese Aufgabe wird erfindungsgemäß durch ein Verfahren der im Anspruch 1 genannten Art und durch eine Vorrichtung nach Anspruch 7 zur Durchführung des Verfahrens gelöst.

Weitere Einzelheiten der Erfindung sind in Unteransprüchen dargelegt und werden im nachfolgenden anhand eines Ausführungsbeispieles näher erläutert.

Es zeigen:
- Figur 1: eine Gesamtansicht eines Arbeitsdiagrammes zur Darstellung der einzelnen Verfahrensschritts während des Entlüftens,
- Figur 2: den vollautomatischen Programmablaufplan während der ersten und dritten Entlüftungs- und Befüllphase des Ansteuergerätes,
- Figur 3: den vollautomatischen Programmablaufplan für die in Figur 1 abgebildeten Entlüftungs- und Befüllphasen 2 und 4.

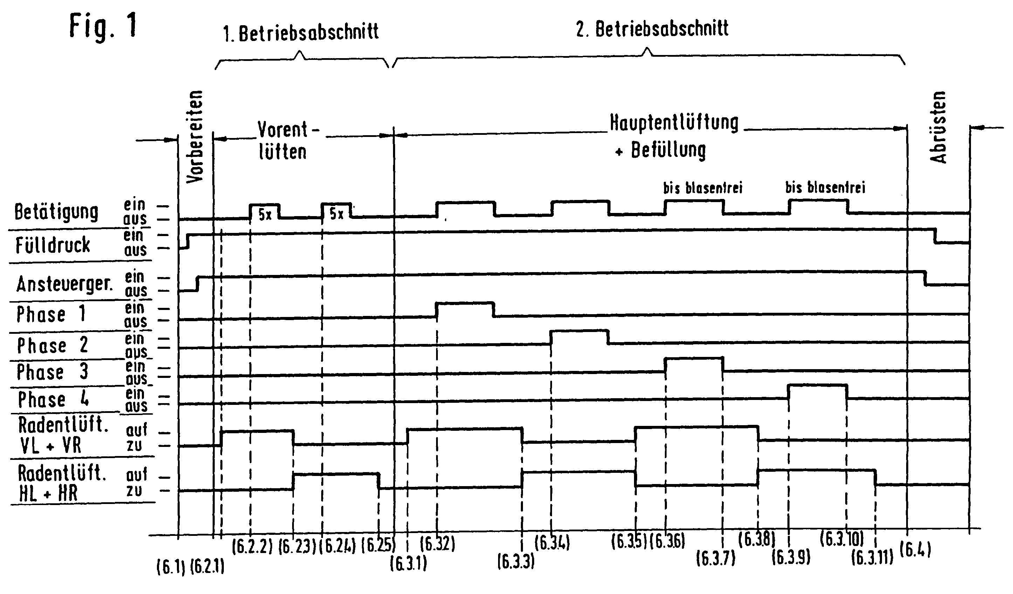

Die Figur 1 zeigt eine Gesamtansicht eines Arbeitadiagrammes zum Entlüften und Befüllen einer Zweikreisbremsanlage für Kraftfahrzeuge, wozu entlang der Ordinate die einzelnen für den Arbeitsmaßnahmen erforderlichen Funktionsmittel und entlang der Abszisse die erforderlichen Verfahrensschritte aufgetragen sind. Die Gesamtansicht des Arbeitsdiagrammes untergliedert sich hierbei in vier Arbeitsfeldern, angefangen mit der Vorbereitung (Aufrüstung) des Kraftfahrzeugs, fortschreitend über den ersten Betriebsabschnitt des Vorentlüftens zum vollautomatisch steuerbaren Hauptentlüften und Befüllen im zweiten Betriebsabschnitt und schließlich bishin zum Abrüsten des Fahrzeugs durch Entfernen der jeweils erforderlichen Arbeitsmittel.
Bevor das eigentliche Entlüftungs- und Befüllverfahran beschrieben wird, ist vorauszusetzen, daß am Bremsdruckgeber bzw. im Regelfalle am Nachlaufbehälter des Bremsdruckgebers eine Entlüftungs- als auch Befüllvorrichtung angeschlossen ist, wobei der Befülldruck zwischen 0,7 bis 1 bar betragen soll. Ferner ist das Fahrzeug mit einem Ansteuergerät zu versehen, das vorzugsweise über eine Diagnoseeinheit der Bremsanlagenansteuer- und Regelelektronik eine Identifizierung des Bremsanlagentyps ermöglicht, um in Abhängigkeit von einer schlupfgeregelten Zweikreisbremsanlage mit Blockier- und Gierschutz als auch mit Anfahrschlupfregelung den für den jeweiligen Bremsanlagentyp charakteristischen Programmablaufplan auswählen zu können. Zur Aktivierung des Bremsdruckgebers ist ferner die Verwendung eines Pedalbetätigungszylinders von Vorteil, der vorzugsweise gleichfalls vom Ansteuergerät betätigt werden kann, sodaß eine manuelle Betätigung entfällt. Ersatzweise kann bei manueller Betätigung zur Anleitung des Personals eine Signallampe ggf. Weisung zur korrekten Bremspedalbetätigung geben. Der Pedalbetätigungszylinder soll so bemessen sein, daß bei geschlossenen Entlüfterventilen an den Radbremsen ein Druck von ca. 50 bis 60 bar im Bremssystem erreicht wird. Nachdem die mit der Entlüftungsvorrichtung verbundenen Entlüftungsschläuche an den Entlüftungsventilen der Radbremse angeschlossen sind kann von der eigentlichen Vorbereitung des Fahrzeuges zum Zwecke der Entlüftung- und Befüllung auf den in Figur 1 weiterhin dargestellten ersten Betriebsabschnitt der Vorentlüftung übergegangen werden, bei der bereits mittels des am Bremsdruckgeber entstehenden Befülldrucks der Befüllvorrichtung eine Volumenergänzung an Druckmittel sichergestellt ist.

Da sich das in Figur 1 dargestellte Arbeitsdiagramm auf eine Zweikreis- Diagonalbremsanlage bezieht, werden zunächst die Entlüftungsventile der vorderen linken und rechten Radbremse (VL,VR) geöffnet, während die Entlüftungsventile der hinteren linken und rechten Radbremsen (HL,HR) geschlossen bleiben (vergleiche Pos. 6.2.1).
Das Bremspedal ist entweder manuell oder mit Hilfe des Pedalbetätigungszylinders ganz durchzutreten, in der untersten Stellung kurz zu halten und anschließend wieder zu lösen. Dieser Vorgang zur Betätigung des Bremsdruckgebers wird im vorgeschlagenen Anwendungsfall fünfmal durchgeführt. Hierbei ist es jedoch unerheblich, ob die an den Entlüfterventilen der vorderen linken und rechten Radbremsen (VL,VR) austretende Flüssigkeit blasenfrei ist (vergl. Pos. 6.2.2).
Anschließend sind die Entlüftungsventile der vorderen linken und rechten Radbremsen (VL,VR) wieder zu verschließen und die Entlüftungsventile der hinteren linken und rechten Radbremsen (HL,HR) zu öffnen (vergl. Pos. 6.2.3).
Das Bremspedal ist erneut durchzutreten, in der unteren Stellung kurz zu halten, und dann wieder zu lösen. Dieser Vorgang wird vorzugsweise fünfmal wiederholt, unabhängig davon, ob an den Entlüftungsventilen der hinteren linken und rechten Radbremsen (HL,HR) die Flüssigkeit blasenfrei austritt (siehe hierzu Pos. 6.2.4 des Arbeitsdiagrammes). Die Pos. 6.2.5 zeigt die Entlüftungsventile der hinteren linken und rechten Radbremse (HL,HR) wieder in Schließstellung.

Damit ist der erste Betriebsabschnitt zur Vorentlüftung aller Radbremsen abgeschlossen und es folgt im zweiten Betriebsabschnitt die Hauptentlüftung der Radbremsen unter Zuhilfenahme eines Ansteuergerätes zum Aktivieren des Bremsdruckgebers, der Druckmodulationsventile und der Pumpe, nach einem für den jeweiligen Bremsanlagentyp charakteristischen Programmablaufplan. Das Ansteuergerät ist hierzu mit einer Diagnoseeinheit der Bremsanlagen an Steuer- und Regelelektronik schaltungstechnisch verbunden, um mittels einer im Ansteuergerät integrierten Auswerteelektronik den Bremsanlagentyp zu identifizieren. Die einzelnen Operationen des Programmablaufplans werden vorzugsweise über ein Anzeigefeld des Ansteuergerätes optisch dargestellt, wobei die mit dem Entlüften und Befüllen der Bremsanlage beauftragte Person menügeführt anhand des Displays vom Ansteuergerät konkrete Anweisung zum Handeln erhält. Die Betätigung des Bremsdruckgebers kann hierbei sowohl durch die beauftragte Person nach Anweisung des Ansteuergerätes erfolgen, wozu sich beispielsweise eine Signallampe eignet, die aufleuchtet, wenn das Pedal zu betätigen und zu halten ist und die erlischt, wenn das Pedal zu lösen ist. Eine weitere Vereinfachung des Entlüftungs- und Befüllungsvorgangs ergibt sich durch Verwendung eines Pedalbetätigungszylinders, der unmittelbar durch elektrische Signale des Ansteuergerätes betrieben werden kann und der geeignet ist, einen hydraulischen Druck von wenigstens 50 bar im Bremssystem zu erzeugen. Bei Verwendung eines Pedalbetätigungszylinders kann die Hauptentlüftung im zweiten Betriebsabschnitt des Verfahrens weitgehend automatisiert ablaufen, sodaß ausschließlich die Entlüftungsventile an den Radbremsen manuell bedient werden müssen.

Im nachfolgenden wird der zweite Betriebsabschnitt des Entlüftungs- und Befüllverfahrens beschrieben, wozu das Ansteuergerät über insgesamt 4 Phasen der Hauptentlüftung und Befüllung nach einem für den jeweiligen Bremsanlagentyp charakteristischen Programmablaufplan aktiv ist. Im vorliegenden Beispiel einer Diagonalbremskreisanlage werden hierzu im ersten Arbeitsschritt die Entlüftungsventile der vorderen linken und rechten Radbremsen (VL,VR) geöffnet, während die übrigen Entlüftungsventile der hinteren Radbremsen (HL,HR) geschlossen bleiben. Dies entspricht der Pos. 6.3.1 des Arbeitsdiagrammes. Nachfolgend wird der Programmablaufplan des Ansteuergerätes für eine erste Phase gestartet, wozu gleichfalls die Betätigungszyklen des Bremsdruckgebers erfolgen. Nach Ablauf der ersten Phase schaltet das Ansteuergerät in Wartestellung. Die Entlüftungsventile der vorderen linken und rechten Radbremsen (VL,VR) werden geschlossen und die Entlüftungsventile der hinteren linken und rechten Radbremsen (HL,HR) werden geöffnet (s. Pos. 6.3.3 in Fig. 1). Es folgt die zweite aktive Phase des Ansteuergerätes, in der der Programmablaufplan zur Entlüftung und Befüllung der hinteren Radbremsen (HL,HR) durchlaufen wird. Nach Beendigung der Phase 2 schaltet das Ansteuergerät erneut in Wartestellung und es werden erneut die vorderen linken und rechten Entlüftungsventile der Radbremsen (VL,VR) geöffnet, nachdem die Entlüftungsventile der hinteren linken und rechten Radbremsen (HL,HR) geschlossen sind (s. Pos. 6.3.5 in Fig. 1). Erneut erfolgt eine aktive Phase (Phase 3) des Ansteuergerätes, in der analog zur Phase 1 der Programmablaufplan für die vorderen Radbremsen (VL,VR) wiederholt wird. Dieser Programmablaufplan nach Phase 3 ist solange zu wiederholen, bis die an den offenen Entlüftungsventilen der vorderen linken und rechten Radbremsen (VL,VR) austretende Bremsflüssigkeit blasenfrei ist (s. Pos. 6.3.6 in Fig. 1). Danach wird das Ansteuergerät manuell angehalten, womit die Entlüftungs- und Befüllphase (Phase 3) abgeschlossen ist (s. Pos. 6.3.7). Die Entlüftungsventile der vorderen linken und rechten Radbremsen (VL,VR) werden geschlossen und die Entlüftungsventile der hinteren linken und rechten Radbremsen (HL,HR) zwecks Ausführung der Phase 4 geöffnet (s. Pos. 6.3.1). Der Programmablauf für die Entlüftungs- und Befüllphase (Phase 4) wird manuell ausgelöst und solange durchgeführt, bis auch an den Entlüftungsventilen der hinteren Radbremsen (HL,HR) die Bremsflüssigkeit blasenfrei austritt (s. Pos. 6.3.9). Danach wird das Ansteuergerät ausgeschaltet, womit die Phase 4 abgeschlossen ist (s. Pos. 6.3.10). Die Entlüftungsventile der hinteren linken und rechten Radbremsen (HL,HR) werden geschlossen (Pos. 6.3.11). Aus Figur 1 geht hervor, daß während der gesamten vier Betriebsphasen des Ansteuergerätes die Pedalbetätigung, bestehend aus jeweils 5 Pedalhüben, über vier Schaltfolgen aktiv ist, bis die Bremsflüssigkeit blasenfrei an den einzelnen Entlüftungsventilen austritt. Der Programmablauf des Ansteuergerätes für die einzelnen Phasen 1-4 beinhaltet somit jeweils 5 Schaltfolgen zu je 5 Pedalhüben mit entlüftungsunterstützender Ventil- und Pumpenmotorschaltung. Wie bereits eingangs erwähnt, unterscheidet das Ansteuergerät zwischen schlupfgeregelten Bremsanlagen, die mit Blockierschutzregelung als auch mit Antriebsschlupfregelfunktion versehen sind. Hierdurch ändert sich in Abhängigkeit des Funktionsumfanges der Bremsanlage der Programmablaufplan, wozu beispielhaft im nachfolgenden mehrere Programmablaufpläne herausgestellt werden, die quasi einer Makrodarstellung der einzelnen Phasen 1-4 in Figur 1 entsprechen.

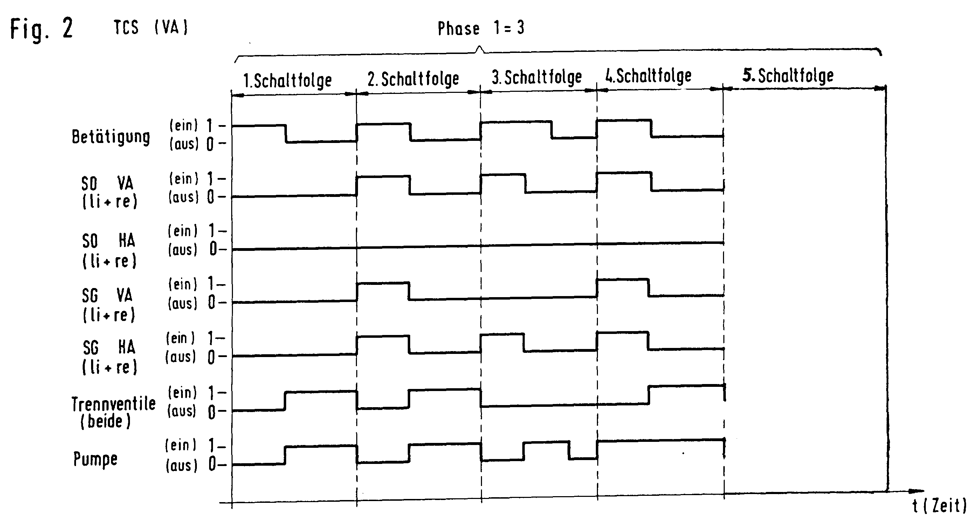

Die Figur 2 zeigt beispielhaft die Phase 1 des Ansteuergerätes mit mehreren Schaltfolgen der Bremsdruckgeberbetätigung als auch die Schaltfolgen der Druckmodulationsventile (SO,SG) an den Vorder- und Hinterrädern (VA,HA) als auch die Schaltfolge der Pumpe über der Abzisse des Diagrammes aufgetragen. Die Abszisse entspricht der Zeitachse. Sofern es sich bei der zu entlüftenden und zu befüllenden Bremsanlage um ein Antiblockiersystem mit Anfahrschlupfregelfunktion handelt, so ist gleichfalls der Ansteuerzyklus für das Trennventil über der Zeitachse aufzuzeigen, das normalerweise zwischen dem Bremsdruckgeber und den Druckmodulationsventilen (SO,SG) der Radbremsen in die Bremleitung geschaltet ist. Im vorliegenden Beispiel nach Figur 2 soll ausschließlich der Programmablauf des Ansteuergerätes für die erforderlichen Schaltfolgen an den antriebsschlupfgeregelten Vorderradbremsen dargestellt werden. Aus Figur 2 geht hervor, daß während der Betätigung des Bremsdruckgebers in der 2., 3. und 4. Schaltfolge jeweils jedes den Vorderradbremsen (VL,VR) einlaßlseitig zugeordnete Druckmodulationsventil (SO, VA) und die auslaßseitig den Hinterradbremsen (HL,HR) zugeordneten Druckmodulationsventile (SG, HA) elektromagnetisch erregt sind. Die Trennventile sind während der Schaltfolge 1,2 und 4 zeitweise elektromagnetisch erregt, während die Pumpe über alle Schaltfolgen zeitweise in Betrieb ist. Es ergibt sich somit bei genauer Betrachtung der Funktionsverläufe einzelner Funktionsbestandteile der Bremsanlage über die Schaltfolgen der Bremsdruckgeberbetätigung der zeitliche Ablauf für die Aktivität und Inaktivität der einzelnen Funktionselemente. Dieser gesamte Programmablauf in Phase 1 des Steuergerätes wiederholt sich in Phase 3 in Figur 1. Die zeitlich längste Betätigung des Bremsdruckgebers ergibt sich in der fünften Schaltfolge, in der auch die beiden der Vorderradbremsen VA einlaßseitig zugeordneten Druckmodulationsventile (SO,VA) als auch die den Hinterradbremsen einlaßseitig zugeordneten Druckmodulationsventile (SO,HA) elektromagnetisch erregt sind und auch die der Hinterradbremsen auslaßseitig zugehörige Druckmodulationsventile (SG,HA) erregt sind, während die Pumpe läuft.

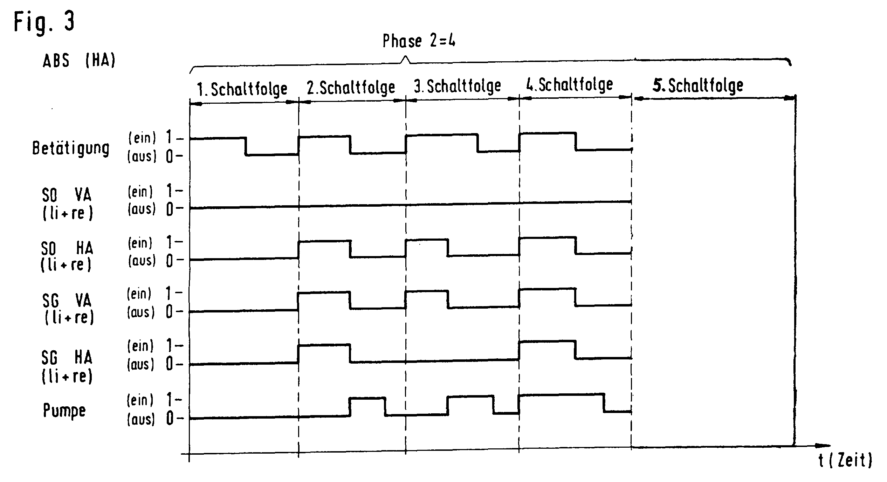

Die Phasen 2 und 4 des Ansteuergerätes in Figur 1 sind beispielhaft anhand der Schaltfolgen für Blockierschutzregelbetrieb an der Hinterachse in Figur 3 dargestellt. Jede der Schaltfolgen besteht wie in Figur 2 aus einem Wiederkehrenden Betätigungszyklus mit entlüftungsunterstützender Ventil- und Pumpenbetätigung, wobei alle Druckmodulationsventile als auch die Pumpe in der ersten Schaltfolge inaktiv in ihrer Ruhestellung verharren, während in den Schaltfolgen 2-4 die einlaßseitig den Hinterradbremsen zugeordneten Druckmodulationsventile (SO, HA) elektromagnetisch erregt schließen und die auslaßseitig den Vorderradbremsen zugeordnete Druckmodulationsventile (SG; VA) elektromagnetisch geöffnet werden. Dies erfolgt beim Vergleich über die Zeitachse (Abszisse) je Schaltfolge in einem synchronen Ablauf von 5 Pedalhüben eines jeweiligen Betätigungszykluses. Die zeitlich längste Betätigung des Bremsdruckgebers ergibt sich in der fünften schaltfolge, in der auch die beiden der Vorderradbremsen VA einlaßseitig zugeordneten Druckmodulationsventile (SO,VA) als auch die den Hinterradbremsen einlaßseitig zugeordneten Druckmodulationsventile (SO,HA) elektromagnetisch erregt sind und auch die der Vorderradbremsen auslaßseitig zugehörige Druckmodulationsventile (SG,VA) erregt sind, während die Pumpe läuft. Die Pumpe ist entsprechend der dargestellten getakteten Betriebsweise ab Schaltfolge 2 in ihrer Einschaltdauer zunehmend aktiv.

Diese beispielhaft gezeigten Schaltfolgen in Figur 2 und Figur 3 sind in Phase 3 und 4 des Arbeitsdiagrammes nach Figur 1 gegebenfalls zu wiederholen, insofern die Bremsflüssigkeit nicht blasenfrei an den Entlüftungsventilen der Hinterrad- und Vorderradbremsen austritt. Nach Beendigung des Programmablaufplans zu Phase 3 und 4 werden das Ansteuergerät, gegebenfalls der Pedalbetätigungszylinder als auch die Entlüftungs- und Befüllvorrichtung von der Bremsanlage getrennt, sodaß nach einem Zeitraum von etwa 20 Min. die gesamte Entlüftung und Befüllung der Bremsanlage mit anschließendem Abrüsten des Fahrzeugs abgeschlossen ist.

### Bezugszeichenliste

- VL: vordere linke Radbremse
- VR: vordere rechte Radbremse
- HL: hintere linke Radbremse
- HR: hintere rechte Radbremse
- SO: einlaßseitiges Druckmodulationsventil
- SG: auslaßseitiges Druckmodulationsventil
- HA: Radbremsen der Hinterachse
- VA: Radbremsen der Vorderachse
- li: links
- re: rechts

## Patentansprüche

1. Verfahren zur Entlüftung und Befüllung einer schlupfgeregelten, hydraulischen Zweikreisbremsanlage für Kraftfahrzeuge, die mit einem Bremsdruckgeber, mit Radbremsen (VL,VR,HL,HR), mit Druckmodulationsventilen (SO,SG) und wenigstens einer Pumpe versehen ist, mit einer an der Zweikreisbremsanlage angeschlossenen Entlüftungsvorrichtung und einer Befüllvorrichtung zur Durchführung des Verfahrens, wobei die Entlüftungsvorrichtung an wenigstens einem Entlüftungsventil einer Radbremse VL,VR,HL,HR angeschlossen ist und die Befülleinrichtung zur Befüllung mit Flüssigkeit am Bremsdruckgeber angeordnet ist, **dadurch gekennzeichnet**, daß die Entlüftung der Radbremsen VL,VR,HL,HR in zwei Betriebsabschnitten vollzogen wird, wobei im ersten Betriebsabschnitt die Radbremsen der Vorderachse und der Hinterachse (VA,HA) unabhängig vom blasenfreien Zustand der Flüssigkeit ausschließlich durch eine geringe Anzahl von Betätigungszyklen des Bremsdruckgebers an den radbremsseitigen Entlüftungsventilen vorentlüftet werden, und daß im zweiten Betriebsabschnitt die blasenfreie Hauptentlüftung und Befüllung der Vorderrad- und Hinterradbremsen mittels mehrerer Betätigungszyklen des Bremsdruckgebers erfolgt, in denen in wiederkehrenden Phasen der Hauptentlüftung und Befüllung der Zweikreisbremsanlage, die Druckmodulationsventile (SO,SG) und die Pumpe taktweise betätigt werden, wobei der Pumpenlauf zum Ende einer Betätigungsreihe des Bremsdruckgebers ein zeitliches Maximum bildet.

2. Verfahren nach Anspruch 1, **dadurch gekennzeichnet**, daß zur Vorentlüftung im ersten Betriebsabschnitt zunächst jeweils eine Radbremse VL,VR,HL,HR jedes Bremskreises durch Öffnen zugehöriger Entlüftungsventile eine Verbindung zur Entlüftungsvorrichtung aufweist, und daß der Bremsdruckgeber um die zu entlüftenden Radbremsen VL,VR,HL,HR mittels eines Betätigungszykluses von mehreren, vorzugsweise 5 Pedalhüben teilentlüftet werden, wobei die Entlüftungsventile der übrigen Radbremsen VL,VR,HL,HR beider Bremskreise geschlossen sind.

3. Verfahren nach Anspruch 2, d**adurch gekennzeichnet**, daß zur Vorentlüftung im ersten Betriebsabschnitt die offenen Entlüftungsventile mit Ablauf des ersten Betätigungszykluses des Bremsdruckgebers geschlossen werden und die geschlossenen Entlüftungsventile der übrigen Radbremsen VL,VR,HL,HR eines jeden Bremskreises geöffnet werden, wonach der Bremsdruckgeber mittels eines weiteren Betätigungszykluses von mehreren, vorzugsweise 5 Pedalhüben betätigt wird.

4. Verfahren nach Anspruch 1, **dadurch gekennzeichnet**, daß zur Hauptentlüftung und Befüllung im zweiten Betriebsabschnitt die Entlüftungsventile jeweils einer Radbremse VL,VR,HL,HR eines jeden Bremskreises geöffnet werden, der Bremsdruckgeber in mehreren aufeinander folgenden Betätigungszyklen betätigt wird, wobei während eines jeden Betätigungszykluses des Bremsdruckgebers mehrere, vorzugsweise 5 Pedalhübe erfolgen.

5. Verfahren nach Anspruch 4, **dadurch gekennzeichnet**, daß die offenen Entlüftungsventile nach Abschluß der aufeinander folgenden Betätigungszyklen des Bremsdruckgebers geschlossen werden und die Entlüftungsventile der übrigen Radbremsen VL,VR,HL,HR eines jeden Bremskreises geöffnet werden, wonach während eines jeden nachfolgenden Betätigungszykluses des Bremsdruckgebers mehrere, vorzugsweise 5 Pedalhübe erfolgen.

6. Verfahren nach Anspruch 4 oder 5, **dadurch gekennzeichnet**, daß der zweite Betriebsabschnitt zur Hauptentlüftung und Befüllung der Radbremsen VL,VR,HL,HR eines jeden Bremskreises solange wiederholt wird, bis das Druckmittel blasenfrei an den Entlüftungsventilen austritt.

7. Vorrichtung zur Durchführung des Verfahrens zur Entlüftung und Befüllung einer schlupfgeregelten, hydraulischen Zweikreisbremsanlage für Kraftfahrzeuge nach den Ansprüchen 1-6, die mit einem Bremsdruckgeber, mit Radbremsen VL,VR,HL,HR, mit Druckmodulationsventilen (SO,SG) und wenigstens einer Pumpe versehen ist, mit einer an der Zweikreisbremsanlage angeschlossenen Entlüftungsvorrichtung und einer Befüllvorrichtung zur Durchführung des Verfahrens, wobei die Entlüftungsvorrichtung an wenigstens einem Entlüftungsventil einer Radbremse VL,VR,HL,HR angeschlossen ist und die Befülleinrichtung zur Befüllung mit Flüssigkeit am Bremsdruckgeber angeordnet ist, **dadurch gekennzeichnet**, daß ein Ansteuergerät zum Aktivieren des Bremsdruckgebers, der Druckmodulationsventile (SO,SG) und der Pumpe vorgesehen ist, das mit einer Diagnoseeinheit der Bremsanlagensteuer- und Regelelektronik schaltungstechnisch verknüpfbar ist.

8. Vorrichtung nach Anspruch 7, **dadurch gekennzeichnet**, daß das Ansteuergerät mit einer den Bremsanlagentyp identifizierenden Auswerteelektronik versehen ist.

9. Vorrichtung nach Anspruch 8, **dadurch gekennzeichnet**, daß die Auswerteelektronik mit einem für den jeweiligen Bremsanlagentyp charakteristischen Programmablaufplan versehen ist, der einzelne Operationen des Programmablaufs optisch darstellt.

## Claims

1. Process of bleeding and filling a slip-controlled, hydraulic dual-circuit brake system for automotive vehicles which includes a braking pressure generator, wheel brakes (VL,VR,HL,HR), pressure modulation valves (SO,SG) and at least one pump, a bleeding device and a filling device connected to the dual-circuit brake system to implement the process, wherein the bleeding device is connected to at least one bleeder valve of a wheel brake (VL,VR,HL,HR) and the filling device for the filling with fluid is arranged on the braking pressure generator,
**characterized** in that bleeding of the wheel brakes (VL,VR,HL,HR) is executed in two sequences of operation: in the first sequence of operation, the wheel brakes of the front axle and the rear axle (VA, HA) are prebled on the wheel-brake-side bleeder valves exclusively by a small numbers of actuating cycles of the braking pressure generator irrespective of the bubble-free condition of the fluid, and in that in the second sequence of operation the bubble-free main bleeding and filling of the front-wheel and rear-wheel brakes is executed by several actuating cycles of the braking pressure generator, during which in recurrent phases of main bleeding and filling of the dual-circuit brake system, the pressure modulation valves (SO, SG) and the pump are clockwise operated, and the pump operation represents a time maximum at the end of a series of actuations of the braking pressure generator.

2. Process as claimed in claim 1,
**characterized** in that for pre-bleeding in the first sequence of operation, initially, one wheel brake (VL,VR,HL,HR) of each brake circuit has a connection to the bleeding device by the opening of associated bleeder valves, and in that the braking pressure generator and the wheel brakes (VL,VR,HL,HR) being bled are pre-bled in an actuating cycle of several, preferably five pedal strokes, with the bleeder valves of the other wheel brakes (VL,VR,HL,HR) of both brake circuits closed.

3. Process as claimed in claim 2,
**characterized** in that for pre-bleeding in the first sequence of operation, the open bleeder valves are closed when the first actuating cycle of the braking pressure generator is completed, and the closed bleeder valves of the other wheel brakes (VL,VR,HL,HR) of each one brake circuit are opened, whereupon the braking pressure generator is actuated by another actuating cycle of several, preferably five pedal strokes.

4. Process as claimed in claim 1,
**characterized** in that for the main bleeding and filling operation in the second sequence of operation, the bleeder valves of a wheel brake (VL,VR,HL,HR) of each one brake circuit are opened, and the braking pressure generator is actuated in several consecutive actuating cycles, and several, preferably five pedal strokes are performed during each of the subsequent actuating cycles of the braking pressure generator.

5. Process as claimed in claim 4,
**characterized** in that the open bleeder valves are closed upon completion of the consecutive actuating cycles of the braking pressure generator, and the bleeder valves of the other wheel brakes (VL,VR,HL,HR) of each one brake circuit are opened, whereupon several, preferably five, pedal strokes are performed during each of the subsequent actuating cycles of the braking pressure generator.

6. Process as claimed in claim 4 or claim 5,
**characterized** in that the second sequence of operation for the main bleeding and filling of the wheel brakes (VL,VR,HL,HR) of each one brake circuit is repeated until the pressure fluid leaving the bleeder valves is without bubbles.

7. Device for implementing the process of bleeding and filling a slip-controlled, hydraulic dual-circuit brake system for automotive vehicles as claimed in claims 1 to 6 which includes a braking pressure generator, wheel brakes (VL,VR,HL,HR), pressure modulation valves (SO, SG) and at least one pump, a bleeding device and a filling device connected to the dual-circuit brake system to implement the process, and the bleeding device is connected to at least one bleeder valve of a wheel brake (VL,VR,HL,HR) and the filling device for the filling with fluid is arranged on the braking pressure generator,
**characterized** in that a control device is provided for activating the braking pressure generator, the pressure modulation valves (SO, SG) and the pump, which is adapted to be linked in terms of circuitry to a diagnosis unit of the actuation and control electronics of the brake system.

8. Device as claimed in claim 7,
**characterized** in that the control device includes an evaluating electronics which identifies the type of brake system.

9. Device as claimed in claim 8,
**characterized** in that the evaluating electronics includes a program flow chart characteristic of the respective brake system type which optically represents individual operations of the program run.

## Revendications

1. Procédé de purge d'air et de remplissage d'un système de freinage hydraulique à deux circuits et à régulation de glissement pour véhicule automobile, qui est pourvu d'un générateur de pression de frein, de freins de roue (VL, VR, HL, HR), de valves de modulation de pression (SO, SG) et d'au moins une pompe, comprenant un dispositif de purge d'air et un dispositif de remplissage servant à la mise en oeuvre du procédé et raccordés au système de freinage à deux circuits, tandis que le dispositif de purge d'air est raccordé à au moins une valve de purge d'air d'un frein de roue (VL, VR, HL, HR) et que le dispositif de remplissage servant au remplissage en liquide est disposé sur le générateur de pression de frein, caractérisé en ce que la purge d'air des £reins de roue (VL, VR, HL, HR) est exécutée en deux sections d'exécution, en ce que, dans la première section d'exécution, les freins de roue de l'essieu avant et de l'essieu arrière (VA, HA) sont soumis à une purge d'air préliminaire, indépendamment de l'état dépourvu de bulles d'air du liquide, exclusivement au moyen d'un faible nombre de cycles d'actionnement du générateur de pression de frein sur les valves de purge d'air situées du côté des freins de roue et en ce que, dans la seconde section d'exécution, la purge d'air principale dépourvue de bulles d'air et le remplissage des freins de roue avant et des freins de roue arrière ont lieu au moyen de plusieurs cycles d'actionnement du générateur de pression de frein au cours desquels, dans des phases de la purge d'air principale et du remplissage du système de frein à deux circuits qui se répètent, les valves de modulation de pression (SO, SG) et la pompe sont actionnées d'une manière impulsionnelle, l'entraînement de la pompe atteignant un maximum dans le temps à la fin d'une série d'actionnements du générateur de pression de frein.

2. Procédé suivant la revendication 1, caractérisé en ce que, pour la purge d'air préliminaire, dans la première section d'exécution, chaque frein de roue (VL, VR, HL, HR) de chaque circuit de frein comporte tout d'abord une liaison au dispositif de purge d'air par ouverture de valves de purge d'air associées et en ce que le générateur de pression de frein et les freins de roue devant être purgés d'air (VL, VR, HL, HR) sont purgés d'air partiellement au moyen d'un cycle d'actionnement de plusieurs, de préférence 5, courses de pédale, tandis que les valves de purge d'air des autres freins de roue (VL, VR, HL, HR) des deux circuits de frein sont fermées.

3. Procédé suivant la revendication 2, caractérisé en ce que, pour la purge d'air préliminaire dans la première section d'exécution, les valves de purge d'air ouvertes sont fermées à l'expiration du premier cycle d'actionnement du générateur de pression de frein et les valves de purge d'air fermées des autres freins de roue (VL, VR, HL, HR) de chaque circuit de frein sont ouvertes, à la suite de quoi le générateur de pression de frein est actionné au moyen d'un autre cycle d'actionnement de plusieurs, de préférence 5, courses de pédale.

4. Procédé suivant la revendication 1, caractérisé en ce que, pour la purge d'air principale et le remplissage, dans la seconde section d'exécution, les valves de purge d'air de chaque frein de roue (VL, VR, HL, HR) de chaque circuit de frein sont ouvertes et en ce que le générateur de pression de frein est actionné en plusieurs cycles d'actionnement se succédant, tandis que plusieurs, de préférence 5, courses de pédale ont lieu pendant chaque cycle d'actionnement du générateur de pression de frein.

5. Procédé suivant la revendication 4, caractérisé en ce que les valves de purge d'air ouvertes sont fermées après achèvement des cycles d'actionnement du générateur de pression de frein qui se succèdent et les valves de purge d'air des autres freins de roue (VL, VR, HL, HR) de chaque circuit de frein sont ouvertes, à la suite de quoi plusieurs, de préférence 5, courses de pédale ont lieu pendant chaque cycle successif d'actionnement du générateur de pression de frein.

6. Procédé suivant la revendication 4 ou 5, caractérisé en ce que la seconde section d'exécution est répétée pour la purge d'air principale et le remplissage des freins de roue (VL, VR, HL, HR) de chaque circuit de frein jusqu'à ce que l'agent de pression sorte dépourvu de bulles d'air sur les valves de purge d'air.

7. Dispositif de mise en oeuvre du procédé de purge d'air et de remplissage d'un système de freinage hydraulique à deux circuits et à régulation du glissement, pour véhicule automobile, suivant les revendications 1 à 6, qui est pourvu d'un générateur de pression de frein, de £reins de roue, de valves de modulation de pression (SO, SG) et d'au moins une pompe, comprenant un dispositif de purge d'air et un dispositif de remplissage servant à la mise en oeuvre du procédé et raccordés au système de freinage à deux circuits, tandis que le dispositif de purge d'air est raccordé à au moins une valve de purge d'air d'un frein de roue (VL, VR, HL, HR) et le dispositif de remplissage servant au remplissage en liquide est disposé sur le générateur de pression de frein, caractérisé en ce qu'il est prévu, pour activer le générateur de pression de frein, les valves de modulation de pression (SO, SG) et la pompe, un appareil de commande qui peut être combiné, conformément à la technique des circuits, à une unité de diagnostic de l'électronique de commande et de régulation de système de freinage.

8. Dispositif suivant la revendication 7, caractérisé en ce que l'appareil de commande est pourvu d'une électronique d'analyse identifiant le type de système de freinage.

9. Dispositif suivant la revendication 8, caractérisé en ce que l'électronique d'analyse est pourvue d'un déroulement de programme qui est caractéristique du type de système de freinage chaque fois considéré et qui représente optiquement différentes opérations du déroulement de programme.
